# EUROPÄISCHE PATENTSCHRIFT

(11) **EP 3 059 119 B1**
(45) Veröffentlichungstag und Bekanntmachung des Hinweises auf die Patenterteilung: **01.05.2019**
(21) Anmeldenummer: 16156145.1
(22) Anmeldetag: 17.02.2016
(51) Int. Cl.: B60P 7/08

(54) **ZURRPUNKT**
LASHING POINT
POINT D'AMARRAGE

(30) Priorität: 17.02.2015 DE 202015100750 U
(43) Veröffentlichungstag der Anmeldung: 24.08.2016
(73) Patentinhaber: Thiele GmbH & Co. KG, 58640 Iserlohn (DE)
(72) Erfinder: NORPOTH, Bernhard, 45309 Essen (DE)
(74) Vertreter: Griepenstroh, Jörg

(56) Entgegenhaltungen:
- DE-A1-102011 101 907
- NL-C2- 1 029 061
- US-A- 3 904 154
- US-A- 4 167 273

## Beschreibung

Die Erfindung betrifft einen Zurrpunkt in einer Ladefläche gemäß den Merkmalen im Oberbegriff des Anspruchs 1.

Zurrpunkte zählen zum Beispiel durch das deutsche Gebrauchsmuster DE 20 2008 008 418 U1 zum Stand der Technik. Derartige Zurrpunkte besitzen eine Schwenkachse für einen Bügel, der aus einer Tasche herausgezogen und in eine Zurrstellung verlagert werden kann. Das Verzurren der Ladung auf der Ladefläche erfolgt unter Zugbelastung des Bügels, der selbsttätig eine Winkellage in Längsrichtung des Zurrmittels einnimmt. Hierbei sollte ein minimaler Winkel zur Ladefläche nicht unterschritten werden. Es ist bekannt, dass sich der Bügel an einer Rückwand des Zurrpunktes abstützen soll und nicht an Einrichtungen auf der Ladefläche, wie zum Beispiel Lichtgitter. Dadurch soll die Beschädigung der Ladefläche vermieden werden. Es ist vorgeschlagen worden, die Rückwand abzukröpfen, damit der abgewinkelte Bügel flächig an einer Oberseite der Rückwand zur Anlage kommt. Allerdings wird der Abstand zwischen der Schwenkachse und der Rückwand dadurch verkleinert. Bei einer Zugbelastung, die einem Winkel kleiner als dem minimal einstellbaren Winkel des Bügels entspricht, wird der Bügel im Kontaktbereich mit der Rückwand daher stark auf Biegung beansprucht, was zu unerwünschten Spannungsspitzen führen kann.

Ein Zurrpunkt mit den Merkmalen im Oberbegriff des Patentanspruchs 1 ist auch aus der NL 1 029 061 C2 bekannt.

Ebenso ist die US 3 904 154 A zu nennen, bei welcher ein Zurrpunkt mit einer Donutförmigen Zurröse beschrieben wird, deren Längsachse parallel zur Ladefläche verläuft. Im Übergangsbereich von einem schlankeren Schaft zu der Donut-förmig verdickten Öse befindet sich ein Radius, der an einen randseitigen Auflagebereich des Zurrpunktes angepasst ist.

Bei minimalen Winkeln relativ zur Ladefläche kann sich dieser Donut-förmige Bereich bzw. der Übergangsbereich zum Schaft auf der gerundeten Kante des Zurrpunktes abstützen. Dadurch werden Torsionskräfte innerhalb des Zurrpunktes reduziert.

Der Erfindung liegt die Aufgabe zugrunde, einen Zurrpunkt in oder an einer Ladefläche aufzuzeigen, welcher hinsichtlich der Spannungsspitzen im Bügel auch bei Kräften, die unterhalb des minimal einstellbaren Winkels angreifen optimiert ist.

Diese Aufgabe ist bei einem Zurrpunkt mit den Merkmalen des Anspruchs 1 gelöst.

Vorteilhafte Weiterbildungen der Erfindung sind Gegenstand der Unteransprüche.

Die Erfindung betrifft einen Zurrpunkt für eine Ladefläche, insbesondere in einer oder an einer Ladefläche eines Transportfahrzeugs. Der Zurrpunkt umfasst einen Bügel mit seitlichen Führungszapfen. Die Führungszapfen sind um eine Achse unterhalb der Ladefläche und insbesondere parallel zur Ladefläche verschwenkbar. Die Führungszapfen sind dabei in Kulissen geführt. Dadurch ist der Bügel von einer Ruhestellung in eine Zurrstellung verschiebbar. In der Zurrstellung ragt er nach oben über die Ladefläche hinaus. In der Zurrstellung am oberen Ende der Kulissen ist der Bügel um die Achse verschwenkbar. Erfindungsgemäß ist vorgesehen, dass der Bügel an der in der Zurrstellung in Richtung zur Ladefläche verschwenkbaren Seite mindestens einen Stütznocken im Abstand von der Achse aufweist.

Der Stütznocken ist eine Verdickung an der zur Ladefläche verschwenkbaren Seite. Diese Verdickung hat die Funktion in Kontakt mit einem Gegenlager zu gelangen. Das Gegenlager selbst kann Bestandteil der Ladefläche sein. Vorzugsweise handelt es sich bei dem Gegenlager um ein Bauteil des Zurrpunktes selbst. In der Zurrstellung wird der Bügel bei einer Zugrichtung, die kleiner ist als der kleinste erreichbare Winkel des Bügels, nach unten gegen die Ladefläche bzw. ein an der Ladefläche angeordnetes Auflager gestützt. Der Stütznocken ist so gestaltet, dass die an der Kontaktfläche mit dem Auflager entstehenden Kräfte möglichst gleichmäßig in den Bügel eingeleitet werden. Insbesondere ist der Stütznocken so gestaltet, dass es zu keiner Kerbwirkung im Bereich des Auflagers kommt.

Der kleinste Winkel, der zwischen dem Bügel und der Ladefläche einzuschließen ist, wird von der Größe und Position des wenigstens einen Stütznockens bestimmt. Es wird als vorteilhaft angesehen, wenn der Stütznocken sich in einem möglichst großen Abstand von der Achse befindet, da der Abstand zwischen Stütznocken und Achse die Länge des Hebelarmes bestimmt und damit auch die Größe des in den Bügel eingebrachten Drehmoments. Die Größe des Stütznockens ist so zu verstehen, dass der Stütznocken eine gewisse Höhe hat. Die Höhe wird in Axialrichtung der von dem Bügel umgebenen Öse gemessen. Der Stütznocken sollte auch eine gewisse Breite an seiner Basis haben. Im Übergangsbereich zu dem Bügel ist der Stütznocken daher insbesondere breiter als an seinem freien Ende. Die Übergänge zwischen Stütznocken und Bügel sind vorzugsweise gerundet, so dass die Spannungen gleichmäßig von dem Stütznocken in den Bügel übertragen werden.

Der Bügel ist vorzugsweise umfänglich geschlossen ausgebildet. Der Bügel besitzt einen linken und einen rechten Schenkel. Für eine gleichmäßige Abstützung kann vorzugsweise sowohl am linken als auch am rechten Schenkel jeweils ein Stütznocken angeordnet sein. Wenn es die geometrischen Verhältnisse zulassen, dass sich die Öse im Bügel komplett oberhalb der Ladefläche befindet, ist es auch möglich, den Stütznocken als durchgehende Leiste unterhalb der Öse auszugestalten. Wesentlich ist, dass der Zurrpunkt gleichmäßig belastet wird. Dies wird insbesondere durch Stütznocken erreicht, die weit voneinander entfernt sind, so dass eine möglichst großflächige, mehrfache Abstützung des Zurrpunkts gegeben ist.

Der wenigstens eine Stütznocken soll zudem vorzugsweise eine Stützfläche aufweisen, die bei Erreichen des kleinsten Winkels parallel zu der Ladefläche angeordnet ist. Der Stütznocken kann zu diesem Zweck im Querschnitt zum Beispiel dreieckförmig konfiguriert sein, wobei die Basis dieses Dreiecks mit der verschwenkbaren Seite des Bügels verbunden ist. Eine Flanke bildet die Stützfläche. Die andere Flanke bleibt frei. Bei einem minimal einstellbaren Winkel von zum Beispiel 30° könnten die Flanken des im Querschnitt dreieckförmigen Stütznockens jeweils im Winkel von 30° zur Basis, das heißt, zur Seite des Bügels verlaufen. Der Bügel stützt sich dabei gewissermaßen horizontal, das heißt, in der Ebene der Ladefläche ab. Hierzu kann eine Oberseite einer Rückwand des Zurrpunktes dienen. Die Oberseite der Rückwand verläuft dabei vorzugsweise in der Ebene der Ladefläche. Die Rückwand muss - anders als im Stand der Technik - hierbei nicht mehr abgekröpft sein. Die Oberseite der Rückwand befindet sich dadurch in größerem Abstand von der Schwenkachse. Bei einer Zugbelastung unterhalb des kleinsten erreichbaren Winkels treten daher im Bereich des Stütznockens kleinere Biegemomente auf, als bei einer Abstützung, die näher an der Schwenkachse erfolgt.

Der wenigstens eine Stütznocken hat ferner die Funktion, dass der Bügel noch besser gegen selbsttätiges Zurückrutschen in die Kulisse gesichert ist.

Ein weiterer Vorteil ist, dass der Bediener visuell sicher feststellen kann, ob ein minimaler Winkel von zum Beispiel 30° beim Verzurren unterschritten wurde bzw. ob der Zurrpunkt überhaupt auf Biegung beansprucht wird.

In vorteilhafter Weiterbildung der Erfindung ist vorgesehen, dass die Kulisse einen verbreiterten Abschnitt besitzt, zum Einsetzen der Führungszapfen in die Kulisse. Der verbreiterte Abschnitt ist in einem Abstand von einem oberen Ende und einem unteren Ende der Kulisse angeordnet. Bei der Erfindung ist vorgesehen, dass das Einsetzen der Führungszapfens in die Kulisse über den verbreiterten Abschnitt erfolgt.

Die Kulisse ist primär zur Linearführung des Bügels von einer Ruhestellung in eine Zurrstellung vorgesehen. Ein Verschwenken um die Führungszapfen zwischen der Ruhestellung und der Zurrstellung erfolgt bevorzugt nur im Rahmen der Fertigungstoleranzen. Das heißt, dass die Führungszapfen nicht kreisrund sind. Kreisrunde Zapfen haben den Nachteil, dass der Zurrpunkt auch in der Ruhestellung um die Achse verschwenken kann. Dies kann zu Klappern des Zurrpunkts während der Fahrt eines Transportfahrzeugs führen. Die Führungszapfen besitzen daher diametral angeordnete Abflachungen zur Linearführung. Die Kulisse besitzt an ihrem oberen Ende eine kreisförmige Erweiterung, so dass die abgeflachten Führungszapfen dort um ihre gemeinsame Achse verschwenkbar sind und/oder am unteren Ende eine Verjüngung, so dass der Bügel in der Ruhestellung nicht verschwenken kann. In jedem Fall ist der Bügel in der Zurrstellung verschwenkbar.

Es ist vorgesehen, dass die Rückwand mit Seitenwänden verbunden ist, in denen sich die Kulissen befinden. Es ist ferner vorgesehen, die Seitenwände und die Kulissen miteinander zu verschweißen, so dass ein C-förmiges Gehäuse entsteht. Dieses vorgefertigte Gehäuse ist noch nicht mit dem Bügel verbunden. Dies erfolgt erst kurz vor der Montage. Hierzu kann der Bügel mit seinen abgeflachten Führungszapfen in den verbreiterten Abschnitt der Kulisse eingesetzt werden. Das ist auch dann möglich, wenn die Seitenwände bereits einen festen Abstand zueinander haben und über die Rückwand miteinander verbunden sind.

Die Führungszapfen besitzen keine endseitigen Verdickungen oder Anstauchungen. Sie besitzen einen über ihre Länge gleichbleibenden Querschnitt. Insbesondere stehen sie nicht mit ihren freien Enden nach außen über die Kulissen in den Seitenwänden vor.

Um in der Einbaulage ein Herausgleiten der Führungszapfen aus der Kulisse zu verhindern, muss sichergestellt werden, dass es im Bereich des verbreiterten Abschnitts eine Schwenkbegrenzung gibt. Das bedeutet, dass der im Bereich des Abschnitts um die Achse verschwenkbare Bügel nur so viel Freiraum hat, dass er einerseits gegen die Rückwand verschwenkt werden kann, was keinesfalls ein Herausgleiten des Führungszapfens aus der Kulissenführung ermöglicht, und andererseits über die Schwenkbegrenzung, die der Rückwand gegenüberliegt, an dem Herausschwenken gehindert ist. In praktischer Anwendung befindet sich die Schwenkbegrenzung oberhalb des verbreiterten Abschnitts.

Der Zurrpunkt ist vorzugsweise in einen Profilholm mit C-förmigem Querschnitt eingesetzt. Die offene Seite des C-förmigen Profilholms weist zur Ladefläche, wobei die Ladefläche mit einem der beiden Schenkel des C-förmigen Profilholms abschließt. In diesem C-förmigen Profilholm ist eine Öffnung angeordnet, die nach oben, das heißt, zur Ladefläche hin offen ist. In diese Tasche kann zur Montage das Gehäuse des Zurrpunkts, bestehend aus der Rückwand und den beiden Seitenwänden, mit dem eingehängten Bügel eingesetzt werden. Die Öffnung im Profilholm ist auch zur Seite des Profilholms, das heißt, von der Ladefläche weg so weit geöffnet, dass der Profilholm die Schwenkbegrenzung für den Bügel bildet. Die Seitenwände können nun leicht zugänglich von außen mit dem Profilholm verschweißt werden.

Die Erfindung wird nachfolgend anhand eines in den Zeichnungen dargestellten Ausführungsbeispiels näher erläutert. Es zeigen:
- Figur 1: in der Perspektive einen Längenabschnitt eines Profilholms seitlich einer Ladefläche mit einem darin integrierten Zurrpunkt in der Ruhestellung;
- Figur 2: den Zurrpunkt der Figur 1 in einer Zurrstellung;
- Figur 3: einen Querschnitt durch die Darstellung der Figur 1 mit einer vertikalen Schnittebene;
- Figur 4: eine Darstellung des Zurrpunkts der Figur 1 in Richtung des Pfeils IV aus Figur 1;
- Figur 5: einen vertikalen Querschnitt durch die Darstellung des Zurrpunkts der Figur 2 in Blickrichtung des Pfeils V in Figur 2;
- Figur 6: eine Seitenansicht des Zurrpunkts in Blickrichtung des Pfeils VI in Figur 6;
- Figur 7: den Zurrpunkt der Figur 1 in einer weiteren Perspektive und
- Figur 8: den Zurrpunkt in der Position gemäß Figur 7 aus Blickrichtung des Pfeils VIII in Figur 7.

Die Figuren zeigen einen Zurrpunkt 1, der in einen eine umfangseitige Begrenzung einer Ladefläche 2 eines ansonsten nicht näher dargestellten Transportfahrzeugs bildenden Profilholm 3 eingesetzt ist. Der Profilholm 3 hat einen C-förmigen Querschnitt mit einem oberen Schenkel 4, und einem unteren Schenkel 5 sowie mit einen die beiden Schenkel 4, 5 verbindenden Steg 6. Der Profilholm 3 ist zur Ladefläche 2 hin offen ausgebildet.

Der Zurrpunkt 1 umfasst einen Bügel 7, welcher in einem Gehäuse 8 schwenkbar gelagert sowie vertikal geführt verschiebbar ist. Vertikal bedeutet in diesem Zusammenhang senkrecht zur Ladefläche 2 und bezeichnet die Hochrichtung in den Figuren.

Das Gehäuse 8 ist mittels Schweißung in einer nach oben offenen und teilweise zur Außenseite hin offenen Aussparung 9 des Profilsholms 3 fixiert. Die Aussparung 9 erstreckt sich im oberen Schenkel 4 des Profilholms 3 sowie über einen Teil der Höhe seines Stegs 6.

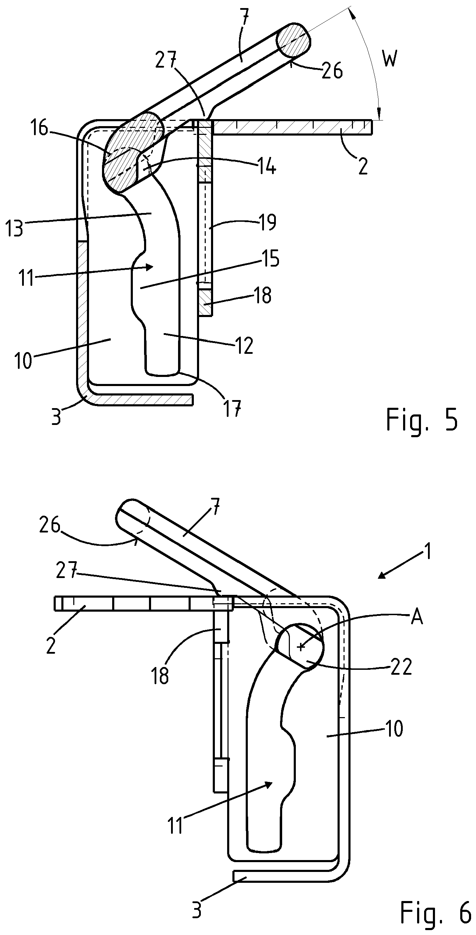

Das Gehäuse 8 besitzt zwei quer zum Profilholm 3 ausgerichtete Seitenwände 10. In diesen Seitenwänden 10 befinden sich gekrümmte Kulissen 11. Figur 5 zeigt, dass die gekrümmten Kulissen 11 sich jeweils aus einem weitgehend vertikalen unteren Schenkel 12, einem gekrümmten oberen Schenkel 13 sowie einer sich an den gekrümmten Schenkel 13 anschließenden kreisabschnittsförmigen Erweiterung 14 zusammensetzen.

Im unteren Schenkel 12 befindet sich ein verbreiterter Abschnitt 15, der im Abstand vom oberen Ende 16 und dem unteren Ende 17 an der Kulisse 11 angeordnet ist (Figur 5).

Zum Gehäuse 8 gehört ferner eine Rückwand 18. Die Rückwand 18 erstreckt sich zwischen den Seitenwänden 10 und ist mit diesen in nicht näher dargestellter Weise verschweißt. Innerhalb der Rückwand 18 befindet sich zur Gewichtsreduzierung eine kreisrunde Öffnung 19. Die Rückwand 18 erstreckt sich bis in die Ebene der Ladefläche 2 und besitzt eine Oberseite 20, die parallel zur Ladefläche 2 verläuft.

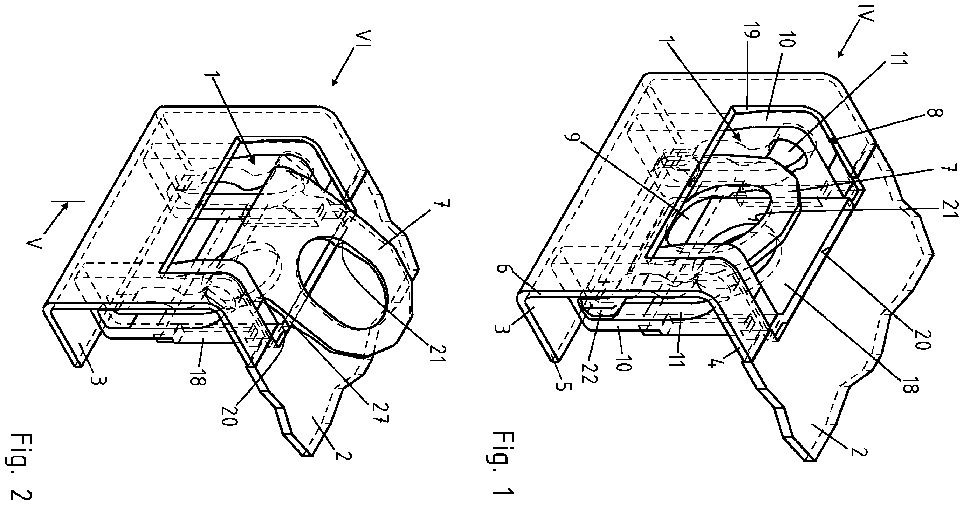

Das Gehäuse 8 wird vorgefertigt, das heißt, die miteinander über die Rückwand 18 verbundenen Seitenwänden 10 zusammen mit dem Bügel 7 werden in die Öffnung 19 in den Profilholm 3 eingesetzt und mit diesem verschweißt. Figur 1 zeigt dabei den Bügel 7 in der Ruhestellung.

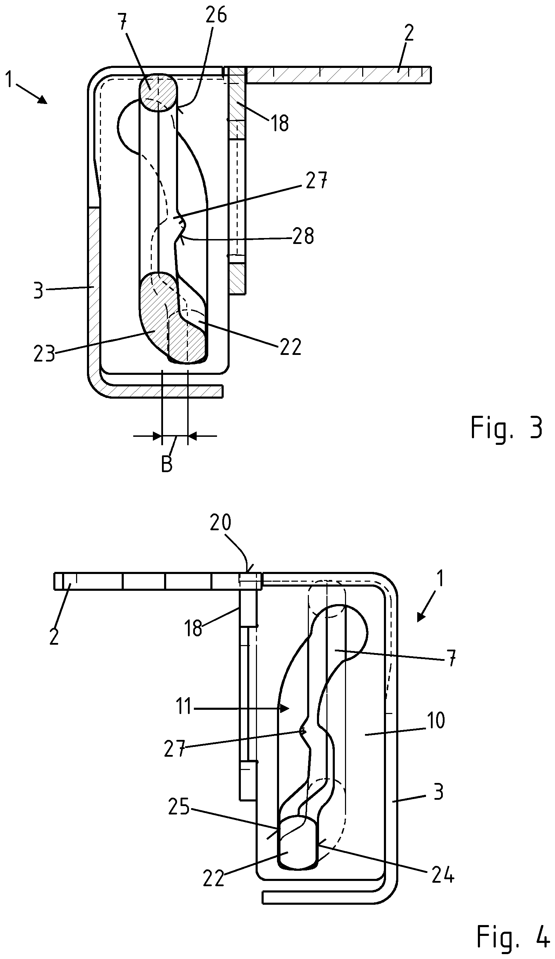

Der Bügel 7 besitzt eine ovale Öse 21, in die bei ausgefahrener Position ein Haken eines nicht näher dargestellten Zurrgeschirrs, wie beispielsweise eine Zurrkette, eingehängt werden kann. Der Bügel 7 besitzt an einem Ende zwei einander diametral abgewandte Führungszapfen 21. Oberhalb der Führungszapfen 22 besitzt der Bügel 7 Abkröpfungen 23, durch welche der Bügel 7 um einen Abstand B zu einer Mittelachse der Kulisse 11 versetzt ist (Figur 3).

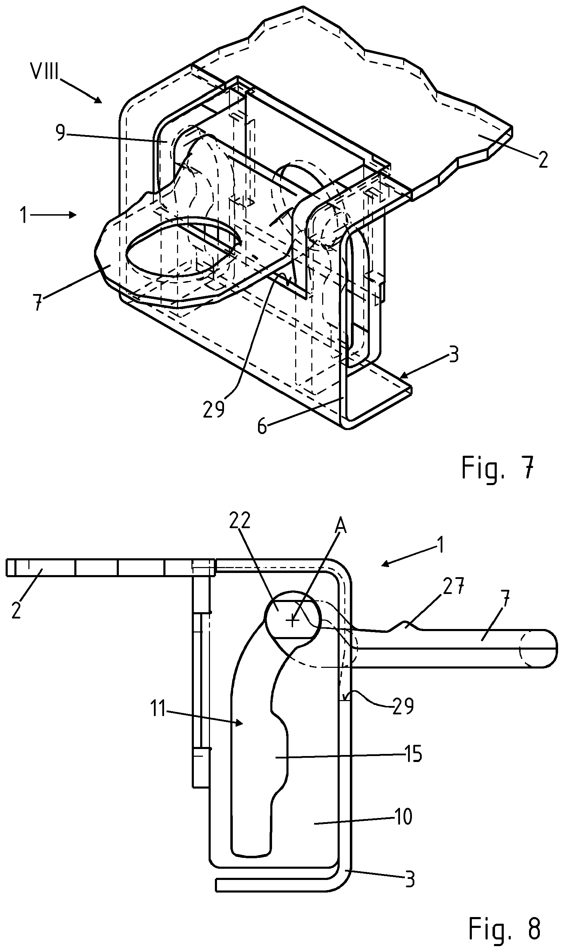

Figur 4 zeigt, dass die Führungszapfen 22 diametral angeordnete Abflachungen 24, 25 besitzen. Die Abflachungen 24, 25 befinden sich in einem Abstand zueinander, so dass die Führungszapfen 22 mit leichtem Spiel in Längsrichtung der Kulissen 11 verschoben werden können, in der dargestellten Position gemäß Figur 4 und in dem gekrümmten oberen Schenkel 13 der Kulisse 11 jedoch nicht beliebig verschwenkt werden können. Das ist nur um die Achse A in der kreisabschnittsförmigen Erweiterung 14 am oberen Ende 16 möglich (Figuren 6 und 8). Vor dem Einsetzen des Zurrpunkts 1 in den Profilholm 3 ist das auch im Bereich des verbreiterten Abschnitts 15 (Figur 5) möglich, nach dem Einsetzen nur noch begrenzt.

Die Figuren 2, 5 und 6 zeigen den Bügel 7 in einer Zurrposition. Er ist in Richtung zur Ladefläche 2 verschwenkt. Der Führungszapfen 22 befindet sich in der kreisabschnittsförmigen Erweiterung 14 am oberen Ende 16. Figur 5 zeigt, dass der Bügel 7 mit seiner der zur Ladefläche 2 verschwenkbaren Seite 26 einen Winkel W von 30° mit der Ladefläche 2 einnimmt. Dies ist der kleinste erreichbare Winkel W. Der Winkel W wird durch die Größe und Position eines Stütznockens 27 bestimmt, der auf der Oberseite 20 der Rückwand 18 aufliegt. Der Stütznocken 27 ist im Querschnitt dreieckförmig konfiguriert. Je ein Stütznocken 27 befindet sich an jedem Schenkel des Bügels 7 bzw. beiderseits der Öse 21. Eine Stützfläche 28 des Stütznockens 27, die mit der Oberseite 20 der Rückwand 18 in Kontakt steht, ist abgeflacht und steht in einem Winkel W zur Seite 26 des Bügels 7 (Figur 3). Dadurch liegt der Stütznocken 27 flach auf der Oberseite 20 der Rückwand 18 auf.

Die Figuren 7 und 8 zeigen den Bügel 7 in einer weiteren Position. Der Bügel 7 ist nach außen über den Steg 6 des Profilholms 3 geschwenkt. Er befindet sich in einer horizontalen Position, kann allerdings noch ein wenig weiter abgesenkt werden, bis er auf eine Schwenkbegrenzung 29 stößt. Die Schwenkbegrenzung 29 wird von der Öffnung 19 im Profilholm 3 gebildet. Diese Schwenkbegrenzung 29 bzw. Unterkante der Öffnung 19 befindet sich oberhalb des verbreiterten Abschnitts 15 (Figur 8). Oberhalb meint damit näher zur Ladefläche 2 hin. Diese Schwenkbegrenzung 29 verhindert, dass sich der Bügel 7, wenn er sich mit seinen Führungszapfen 22 im Bereich des verbreiterten Abschnitts 15 befindet, so weit verschwenkt werden kann, dass er aus den beiden Kulissen 11 entnommen werden kann.

Ein Vorteil dieser Anordnung ist, dass die Führungszapfen 22 keine endseitigen Verdickungen aufweisen müssen. Sie werden einzig durch die Schwenkbegrenzung 29 daran gehindert, aus den Seitenwänden 10 entnommen werden zu können. Die Führungszapfen 22 können daher so kurz gestaltet sein, dass sie nicht über die Außenseiten des Gehäuses 8 bzw. die Kulissen 11 vorstehen, sondern im Wesentlichen bündig mit den Kulissen 11 bzw. den Seitenwänden 10 abschließen.

### Bezugszeichen:

- 1 -: Zurrpunkt
- 2 -: Ladefläche
- 3 -: Profil holm
- 4 -: oberer Schenkel von 3
- 5 -: unterer Schenkel von 3
- 6 -: Steg von 3
- 7 -: Bügel
- 8 -: Gehäuse
- 9 -: Aussparung in 3
- 10 -: Seitenwände von 8
- 11 -: Kulissen in 10
- 12 -: vertikaler Schenkel von 11
- 13 -: gekrümmter Schenkel von 11
- 14 -: Erweiterung von 11
- 15 -: verbreiterter Abschnitt in 11
- 16 -: oberes Ende von 11
- 17 -: unteres Ende von 11
- 18 -: Rückwand von 8
- 19 -: Öffnung
- 20 -: Oberseite von 18
- 21 -: Öse
- 22 -: Führungszapfen
- 23 -: Abkröpfung
- 24 -: Abflachung an 22
- 25 -: Abflachung an 22
- 26 -: Seite von 7
- 27 -: Stütznocken
- 28 -: Stützfläche von 27
- 29 -: Schwenkbegrenzung

- A -: Achse
- B -: Abstand
- W -: Winkel

## Patentansprüche

1. Zurrpunkt in oder an einer Ladefläche, der einen Bügel (7) mit seitlichen Führungszapfen (22) aufweist, die um eine Achse (A) unterhalb zur Ladefläche (2) verschwenkbar und in Kulissen (11) geführt sind, so dass der Bügel (7) von einer Ruhestellung in eine Zurrstellung verschiebbar ist und in der Zurrstellung nach oben über die Ladefläche (2) ragt und in der Zurrstellung in Richtung zur Ladefläche (2) um die Achse (A) verschwenkbar ist, **dadurch gekennzeichnet, dass** der Bügel (7) an seiner in der Zurrstellung in Richtung zur Ladefläche (2) verschwenkbaren Seite (26) mindestens einen Stütznocken (27) im Abstand von der Achse (A) aufweist, wobei der Stütznocken (27) eine Höhe hat, die in Axialrichtung der von dem Bügel (7) umgebenen Öse gemessen wird.

2. Zurrpunkt nach Anspruch 1, **dadurch gekennzeichnet, dass** ein kleinster Winkel (W), der zwischen dem Bügel (7) und der Ladefläche (2) einzuschließen ist von der Größe und Position des wenigstens einen Stütznockens (27) bestimmt ist.

3. Zurrpunkt nach Anspruch 1 oder 2, **dadurch gekennzeichnet, dass** der Bügel (7) an seiner zur Ladefläche (2) verschwenkbaren Seite (26) zwei Stütznocken (27) aufweist.

4. Zurrpunkt nach Anspruch 2 oder 3, **dadurch gekennzeichnet, dass** der wenigstens eine Stütznocken (27) eine Stützfläche (28) aufweist, die bei Erreichen des kleinsten Winkels (W) parallel zu Ladefläche (2) angeordnet ist.

5. Zurrpunkt nach einem der Ansprüche 1 bis 4, **dadurch gekennzeichnet, dass** der wenigstens eine Stütznocken (27) bei Erreichen des kleinsten Winkels (W) an einer Oberseite (20) einer Rückwand (18) des Zurrpunktes (1) abgestützt ist.

6. Zurrpunkt nach Anspruch 5, **dadurch gekennzeichnet, dass** die Oberseite (20) der Rückwand (18) in der Ladefläche (2) angeordnet ist.

7. Zurrpunkt nach einem der Ansprüche 1 bis 6, **dadurch gekennzeichnet, dass** die Kulisse (11) einen verbreiterten Abschnitt (15) besitzt, zum Einsetzen der Führungszapfen (22) in die Kulisse (11), wobei der verbreiterte Abschnitt (15) in einem Abstand von einem oberen Ende (16) und einem unteren Ende (17) der Kulisse (11) angeordnet ist.

8. Zurrpunkt nach Anspruch 7, **dadurch gekennzeichnet, dass** die Rückwand (18) mit Seitenwänden (10) verbunden ist, in denen sich die Kulissen (11) befinden und ein C-förmiges Gehäuse (8) bilden, wobei die der Rückwand (18) gegenüberliegende Seite des Gehäuses (8) in der Einbaulage des Gehäuses (8) an der Ladefläche (2) eine Schwenkbegrenzung (29) aufweist, die sich oberhalb des verbreiterten Abschnittes (15) befindet.

9. Zurrpunkt nach einem der Ansprüche 1 bis 8, **dadurch gekennzeichnet, dass** die Führungszapfen (22) über ihre Länge einen gleichbleibenden Querschnitt besitzen.

10. Zurrpunkt nach einem der Ansprüche 1 bis 9, **dadurch gekennzeichnet, dass** die Kulissen (11) an ihren oberen Enden (16) kreisförmig erweitert sind, wobei die Führungszapfen (22) diametral angeordnete Abflachungen (24, 25) besitzen, deren Abstand (B) eine lineare Verlagerung in den Kulissen (11) ermöglicht und in der Einbaulage nur in der Zurrstellung am oberen Ende (16) der Kulissen (11) ein Verschwenken um die Achse (A) ermöglichen.

## Claims

1. Lashing point in or on a loading surface, which has a bracket (7) with lateral guide pins (22), which are guided pivotably around an axis (A) below the loading surface (2) and into connecting links (11) such that the bracket (7) is displaceable from a rest position into a lashing position and in the lashing position protrudes upwards over the loading surface (2) and in the lashing position is pivotable in the direction of the loading surface (2) around the axis (A), **characterised in that** the bracket (7) has, on its side (26) pivotable in the lashing position in the direction of the loading surface (2), at least one support cam (27) at a distance from the axis (A), wherein the support cam (27) has a height, which is measured in the axial direction of the eyelet surrounded by the bracket (7).

2. Lashing point according to claim 1, **characterised in that** a smallest angle (W), which is to be formed between the bracket (7) and the loading surface (2), is determined by the size and position of the at least one support cam (27).

3. Lashing point according to claim 1 or 2, **characterised in that** the bracket (7) has, on its side (26) pivotable to the loading surface (2), two support cams (27).

4. Lashing point according to claim 2 or 3, **characterised in that** the at least one support cam (27) has a support surface (28), which is arranged parallel to the loading surface (2) when the smallest angle (W) is reached.

5. Lashing point according to any one of claims 1 to 4, **characterised in that** the at least one support cam (27) is supported on an upper side (20) of a rear wall (18) of the lashing point (1) when the smallest angle (W) is reached.

6. Lashing point according to claim 5, **characterised in that** the upper side (20) of the rear wall (18) is arranged in the loading surface (2).

7. Lashing point according to any one of claims 1 to 6, **characterised in that** the connecting link (11) has a wider section (15), for inserting the guide pins (22) into the connecting link (11), wherein the wider section (15) is arranged at a distance from an upper end (16) and a lower end (17) of the connecting link (11).

8. Lashing point according to claim 7, **characterised in that** the rear wall (18) is connected to side walls (10), in which the connecting links (11) are located and form a C-shaped housing (8), wherein the side of the housing (8) opposite the rear wall (18) has, in the installation position of the housing (8) on the loading surface (2), a pivot delimitation (29), which is above the wider section (15).

9. Lashing point according to any one of claims 1 to 8, **characterised in that** the guide pins (22) have, over their length, a constant cross-section.

10. Lashing point according to any one of claims 1 to 9, **characterised in that** the connecting links (11), on their upper ends (16), are expanded in a circular manner, wherein the guide pins (22) have diametrically arranged flattened portions (24, 25), whose distance (B) allows a linear displacement into the connecting links (11) and in the installation position allows pivoting around the axis (A) only in the lashing position at the upper end (16) of the connecting links (11).

## Revendications

1. Point d'amarrage dans ou au niveau d'une surface de chargement, qui présente un étrier (7) avec des broches de guidage (22) latérales, qui sont pivotantes autour d'un axe (A) sous la surface de chargement (2) et guidées dans des coulisses (11), de sorte que l'étrier (7) soit déplaçable d'une position de repos à une position d'amarrage et fasse saillie de la surface de chargement (2) vers le haut dans la position d'amarrage et soit pivotant autour de l'axe (A) en direction de la surface de chargement (2) dans la position d'amarrage, **caractérisé en ce que** l'étrier (7) présente, au niveau de son côté (26) pivotant en direction de la surface de chargement (2) dans la position d'amarrage, au moins une came de soutien (27) à distance de l'axe (A), dans lequel la came de soutien (27) a une hauteur, qui est mesurée dans la direction axiale de l'oeillet entouré par l'étrier (7).

2. Point d'amarrage selon la revendication 1, **caractérisé en ce qu'**un plus petit angle (W), qui doit être formé entre l'étrier (7) et la surface de chargement (2), est déterminé par la taille et la position de l'au moins une came de soutien (27).

3. Point d'amarrage selon la revendication 1 ou 2, **caractérisé en ce que** l'étrier (7) présente deux cames de soutien (27) au niveau de son côté (26) pivotant par rapport à la surface de chargement (2).

4. Point d'amarrage selon la revendication 2 ou 3, **caractérisé en ce que** l'au moins une came de soutien (27) présente une surface de soutien (28), qui est disposée parallèlement à la surface de chargement (2) lors de l'atteinte du plus petit angle (W).

5. Point d'amarrage selon l'une quelconque des revendications 1 à 4, **caractérisé en ce que** l'au moins une came de soutien (27) est soutenue au niveau d'un côté supérieur (20) d'une paroi arrière (18) du point d'amarrage (1) lors de l'atteinte du plus petit angle (W).

6. Point d'amarrage selon la revendication 5, **caractérisé en ce que** le côté supérieur (20) de la paroi arrière (18) est disposé dans la surface de chargement (2).

7. Point d'amarrage selon l'une quelconque des revendications 1 à 6, **caractérisé en ce que** la coulisse (11) possède une section élargie (15) pour l'insertion de la broche de guidage (22) dans la coulisse (11), dans lequel la section élargie (15) est disposée à une distance d'une extrémité supérieure (16) et d'une extrémité inférieure (17) de la coulisse (11).

8. Point d'amarrage selon la revendication 7, **caractérisé en ce que** la paroi arrière (18) est reliée à des parois latérales (10), dans lesquelles se trouvent les coulisses (11) et forment un boîtier (8) en forme de C, dans lequel le côté du boîtier (8) en face de la paroi arrière (18) présente, dans la position de montage du boîtier (8) au niveau de la surface de chargement (2), une limitation de pivotement (29), qui se trouve au-dessus de la section élargie (15).

9. Point d'amarrage selon l'une quelconque des revendications 1 à 8, **caractérisé en ce que** les broches de guidage (22) possèdent une section transversale constante sur leur longueur.

10. Point d'amarrage selon l'une quelconque des revendications 1 à 9, **caractérisé en ce que** les coulisses (11) sont élargies de manière circulaire à leurs extrémités supérieures (16), dans lequel les broches de guidage (22) possèdent des aplatissements (24, 25) disposés diamétralement, dont la distance (B) permet un décalage linéaire dans les coulisses (11), et dans la position de montage seulement dans la position d'amarrage à l'extrémité supérieure (16) des coulisses (11) permettent un pivotement autour de l'axe (A).
